# EUROPÄISCHE PATENTANMELDUNG

(11) **EP 0 968 759 A1**
(43) Veröffentlichungstag der Anmeldung: **05.01.2000**
(21) Anmeldenummer: 99112657.4
(22) Anmeldetag: 02.07.1999
(51) Int. Cl.: B01F 5/04, F16N 7/34, G01F 1/40

(54) **Mischvorrichtung zum Einbringen eines Fluides in ein strömendes, anderes Fluid**

(30) Priorität: 03.07.1998 DE 19829769
(71) Anmelder: FILTERWERK MANN & HUMMEL GmbH, 71638 Ludwigsburg (DE)
(72) Erfinder: Greif, Volker, 71069 Sindelfingen (DE); Kochert, Stefan, 71384 Weinstadt (DE); Mössinger, Klaus, 74182 Obersulm (DE); Spaeth, Bernd, 89073 Ulm (DE)
(74) Vertreter: Voth, Gerhard, Dipl.-Ing.

(57) **Zusammenfassung**

Vorgeschlagen wird eine Mischvorrichtung zum Einbringen eines Fluides in ein strömendes anderes, insbesondere zur Anwendung als Luftbeöler. Dieser Beöler besteht aus einem äußeren Venturirohr 18 und einem inneren Venturirohr 16, wobei eine Zuführung 13 die Versorgung des inneren Venturirohrs 16 mit dem zuzumischenden Öl gewährleistet. Die Zuführung 13 ist über ein Drosselventil 30 und eine Steigleitung 29 mit dem Vorratsbehälter 28 des Beölers verbunden. Ein Regeleinsatz 20 ist in dem ringförmigen Querschnitt zwischen Innenrohr 16 und Strömungskanal 18 angebracht. Dieser weist insbesondere elastische Zungen auf, die bei geringeren Durchflußmengen der Luft den Kreisringquerschnitt weitgehend verschließen, so daß auch in diesem Betriebszustand gleichbleibend gute Vermischungsergebnisse des Öls mit der Luft im Innenrohr 16 gewährleistet sind.

## Beschreibung

### Stand der Technik

Die Erfindung betrifft eine Mischvorrichtung zum Einbringen eines Fluides in ein strömendes anderes nach der Gattung des Patentanspruches 1. Außerdem betrifft die Erfindung ein Verfahren zur Herstellung der oben genannten Mischvorrichtung.

Mischvorrichtungen dieser Art sind z. B. aus der Patentschrift US 5490576 bekannt. Es wird eine Vorrichtung beschrieben, die einen Strömungskanal zur Durchleitung von Gasen besitzt. Im Strömungskanal ist ein Innenrohr angeordnet, welches ebenfalls von dem Gas durchströmt wird. Dieses Innenrohr weist einen Zuleitungskanal auf, durch den eine Flüssigkeit in das Innenrohr eingeleitet werden kann. Die eingeleitete Flüssigkeit wird durch das strömende Gas mitgerissen und so in dem Gas verteilt. Hierzu muß im Innenrohr im Bezug auf die Zuleitung ein Unterdruck erzeugt werden. Dieser Effekt stellt sich grundsätzlich in der Anordnung Innenrohr- Zuleitung ein, kann aber durch eine venturirohrartige Innenkontur des Rohres verstärkt werden.

Vorrichtungen dieser Art sollen bei unterschiedlichen Strömungsgeschwindigkeiten des Gases zuverlässig arbeiten. Um auch bei geringerer Durchsatzmenge des Gases eine ausreichende Strömungsgeschwindigkeit zu Verteilung der Flüssigkeit zu erreichen, kann im Strömungskanal eine Drosselklappe angeordnet werden. Diese verengt den Querschnitt des Strömungskanals bei geringeren Mengendurchsätzen und bewirkt so eine Erhöhung der Strömungsgeschwindigkeit. Nachteilig an der oben genannten Drosselklappe ist jedoch, daß sie die Homogenität der Strömung negativ beeinflußt. Dadurch verschlechtert sich auch die Verteilung der Flüssigkeit im strömenden Gas. Außerdem wird der durch die Drosselklappe angestrebte Effekt dadurch begrenzt, daß sich das Fluid hinter der Drosselklappe wieder über den gesamten Querschnitt des Strömungskanals verteilt, und dadurch die Strömungsgeschwindigkeit des Gases in Richtung des ursprünglichen Wertes absinkt.

Die Aufgabe der Erfindung besteht darin, eine Mischvorrichtung zu schaffen, die unabhängig vom Mengendurchsatz des strömenden Fluides eine optimale Verteilung des einzubringenden Fluides ermöglicht. Diese Aufgabe wird durch die Merkmale des Patentanspruchs 1 gelöst.

### Vorteile der Erfindung

Die erfindungsgemäße Mischvorrichtung weist einen Strömungskanal auf, in dem ein Innenrohr mit einer Zuführung des einzuleitenden Fluides angebracht ist. Weiterhin sind Zungen vorgesehen, die in den Querschnitt des Strömungskanals hineinreichen und diesen bei geringeren Durchsatzmengen des strömenden Fluides verlängern können. Der Vorteil der Erfindung liegt in der parallelen Anordnung von Innenrohr und schwenkbaren Zungen. Die Zungen wirken daher nur auf den Querschnitt um das Innenrohr herum. Bei geringeren Durchsatzmengen wird der Strömungskanal- querschnitt um das Innenrohr immer weiter geschlossen, so daß sich der Durchsatz des Fluides immer mehr auf das Innenrohr konzentriert. Dadurch wird eine optimale Verteilung des einzubringenden Fluides selbst bei geringsten Durchsatzmengen des strömenden Fluides erreicht.

Ein weiterer Vorteil dieser Anordnung besteht darin, daß das Innenrohr vom strömenden Fluid immer direkt angeströmt wird. Die Strömung im Innenrohr ist daher sehr homogen, was die Verteilung des einzubringenden Fluides verbessert. Die Zungen stören die Strömung des Fluides in einem Bereich, der für die Verteilung des einzubringenden Fluides von geringer Bedeutung ist. Dieser Effekt kann gemäß einer weiteren Ausgestaltung der Erfindung noch verbessert werden, wenn die Zungen und das Innenrohr zum Strömungsquerschnitt des Strömungskanals zentralsymmetrisch angeordnet sind. Ein optimales Ergebnis läßt sich durch eine runde Querschnittsform des Strömungsquerschnitts erzielen.

Gemäß einer besonderen Ausführungsform der Erfindung ist das Innenrohr als Venturirohr ausgeführt. Hierdurch läßt sich im Innenrohr eine Erhöhung der Strömungsgeschwindigkeit erzielen. Dadurch steigt das Druckgefälle an der Zuführungsöffnung im Innenrohr, und es können größere Mengen des einzubringenden Fluides besser verteilt werden. Vorteilhaft ist weiterhin, daß sich dabei der Druckverlust des durchströmenden Fluides nur unwesentlich erhöht.

Es ist vorteilhaft, auch den Strömungskanal als Venturirohr auszuführen. Hierdurch läßt sich die Anströmung der Zungen verbessern. Außerdem wird die Strömungsgeschwindigkeit des strömenden Fluides insgesamt gesteigert. Dies wirkt sich indirekt auch auf die Strömungsgeschwindigkeit im Innenrohr auf. Die Verwendung von Venturirohren hat im übrigen auch den Vorteil, daß die Verteilung des einzubringenden Fluids in deren Diffusorbereichen deutlich verbessert wird.

Eine weitere Variante faßt die Zungen zu einem einzigen Bauteil zusammen. Dieser sogenannte Regeleinsatz läßt sich einfach in den Strömungskanal einsetzen. Es ist vorteilhaft den Regeleinsatz aus Kunststoff herzustellen. Dieser kann dann aus einem Stück gegossen sein, wobei die Zungen elastische Zonen aufweisen, die zum einen ihre Verstellbarkeit und zum andern ihre Rückstellwirkung bei geringen Mengendurchsätzen des strömenden Fluides gewährleisten. Selbstverständlich ist eine derartige einteilige Ausführung auch mit metallischen Werkstoffen herstellbar. Mit der einteiligen Bauform lassen sich die Herstellkosten des Regeleinsatzes deutlich verringern.

Gemäß einer weiteren Ausgestaltung der Erfindung kann die Mischvorrichtung mit dem Ansaugkanal einer Brennkraftmaschine verbunden sein. Die Zuführung dient bei dieser Variante zur Einbringung der Kurbelgehäusegase in die Ansaugluft.

Hierbei wirken sich die Vorteile der homogenen Durchmischung von Kurbelgehäusegasen und Ansaugluft positiv auf den Verbrennungsprozeß in den Zylindern der Verbrennungskraftmaschine aus.

Eine weitere zweckmäßige Ausbildung der Erfindung sieht die Verbindung des Zuführungskanals mit einem Vorratsbehälter vor. Dieser enthält das einzubringende Fluid und ist zum Strömungskanal hin mit einer Druckausgleichsbohrung versehen. Es ist vorteilhaft, den Vorratsbehälter mit der Mischvorrichtung durch einen montagegespritzten Kunststoffring zu verbinden.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in den Zeichnungen anhand von schematischen Ausführungsbeispielen beschrieben. Hierbei zeigen:
- Figur 1: eine Mischvorrichtung im Längsschnitt, welche im Ansaugkanal einer Brennkraftmaschine zum Einsatz kommt,
- Figur 2: einen Regeleinsatz im Längsschnitt, wie er in der Mischvorrichtung gemäß Vorrichtung 1 zum Einsatz kommt,
- Figur 3: die Aufsicht auf den Regeleinsatz gemäß Figur 2 in Strömungsrichtung,
- Figur 4: eine Mischvorrichtung im Einsatz als Pressluftbeöler im Zusammenspiel mit einem Vorratsbehälter, wobei die Mischvorrichtung im Längsschnitt dargestellt ist und
- Figur 5: das Detail X des Beölers gemäß Figur 4 im Schnitt, wobei Mischvorrichtung und Vorratsbehälter durch einen montagegespritzten Ring verbunden sind.

### Beschreibung der Ausführungsbeispiele

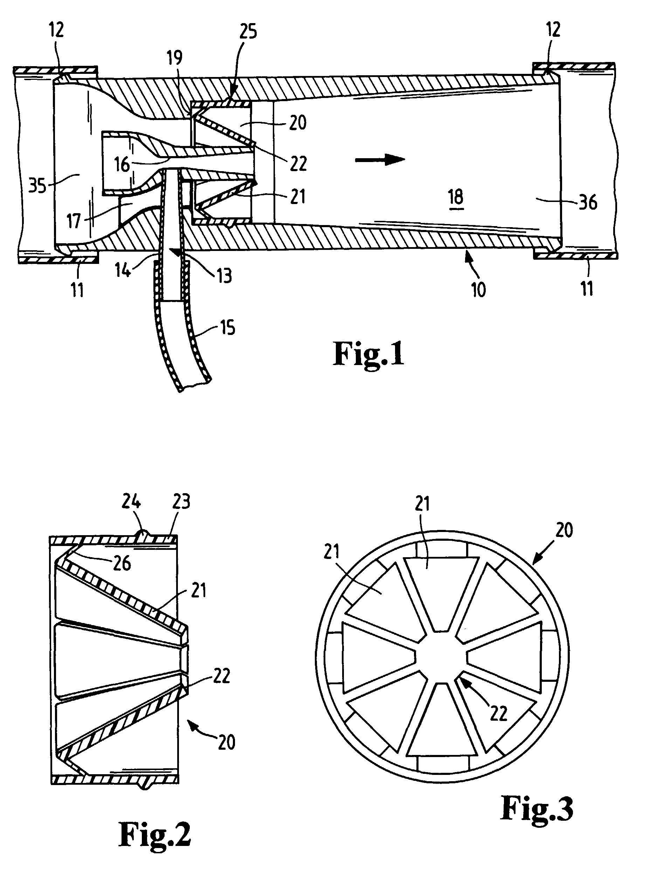

In Figur 1 ist eine Mischvorrichtung 10 dargestellt wie sie z.B. im Ansaugtrakt einer Verbrennungskraftmaschine zum Einsatz kommen kann. Der Ansaugkanal wird durch zwei flexible Rohre 11 gebildet, die auf einen Dichtwulst 12 der Mischvorrichtung geschoben werden. Eine Zuführung 13 weist nach außen hin einen Schlauchstutzen 14 auf Ein Schlauch 15 gewährleistet die Zuleitung der Kurbelgehäusegase einer nicht dargestellten Brennkraftmaschine.

Die Zuleitung 13 mündet in den engsten Querschnitt eines venturirohrförmigen Innenrohrs 16. Das Innenrohr 16 wird durch eine Rippe 17 in einem Strömungskanal 18 gehalten. Innenrohr und Strömungskanal weisen einen Kreisquerschnitt auf und sind koaxial zueinander angeordnet.

Auch der Strömungskanal 18 ist als Venturirohr ausgeführt. Dieser weist jedoch im Bereich des Innenrohrs 16 einen Absatz 19 auf, in den ein Regeleinsatz 20 eingeschoben werden kann. Der Regeleinsatz weist Zungen 21 auf, die ihre Wirkung innerhalb des durch das Innenrohr 16 und den Strömungskanal 18 aufgespannten Kreisquerschnitt entfalten. Die Zungen sind elastisch ausgeführt und öffnen diesen Kreisringquerschnitt in Abhängigkeit von der Durchsatzmenge des strömenden Fluids. Bei sehr kleinen Durchsatzmengen stützen sich die Zungen mit Zungenspitzen 22 auf dem Innenrohr ab. Dadurch ist der Kreisringquerschnitt bis auf Spalte im Regeleinsatz geschlossen und die Ansaugluft durchströmt im wesentlichen das Innenrohr mit im Vergleich zu hohen Durchsatzmengen unveränderter Strömungsgeschwindigkeit. Die Durchströmungsrichtung der Mischvorrichtung ist durch einen Pfeil gekennzeichnet.

In Figur 2 ist der in Figur 1 zur Anwendung gelangende Regeleinsatz 20 gesondert dargestellt. Dieser besteht aus einem Außenring 23 mit einem Montagewulst 24. Wird der Regeleinsatz in den Strömungskanal 18 eingeschoben, kommt dieser an dem Absatz 19 zum Anliegen, wobei der Montagewulst 24 den Regeleinsatz im Zusammenwirken mit einer Ringnut 25 (siehe Figur 1) im Strömungskanal 18 fixiert.

Der Regeleinsatz ist in einem Stück gegossen. An den Innenwänden des Außenrings 23 sind elastische Zonen 26 angegossen, die in die sehr viel steifere Zungen 21 übergehen. Die elastischen Zonen gewährleisten die Funktion der Zungen, sich bei hohen Durchsatzmengen des durchströmenden Fluides an den Außenring 23 anzulegen und bei geringeren Durchsatzmengen in den Strömungsquerschnitt zurückzuklappen.

In Figur 3 ist der Regeleinsatz 20 in der Projektion der Querschnittsfläche des Strömungskanals 18 dargestellt. Die Zungen (21) sind trapezförmig aufgebaut und bilden somit im Zusammenwirken eine im wesentlichen konische Barriere im Strömungsquerschnitt. Die Zungenspitzen 22 lassen selbst bei kleinsten Durchsatzmengen einen kreisförmigen Querschnitt offen, der dem Querschnitt des Innenrohrs entspricht. Dadurch wird dieses in keinem Betriebszustand der Mischvorrichtung verschlossen.

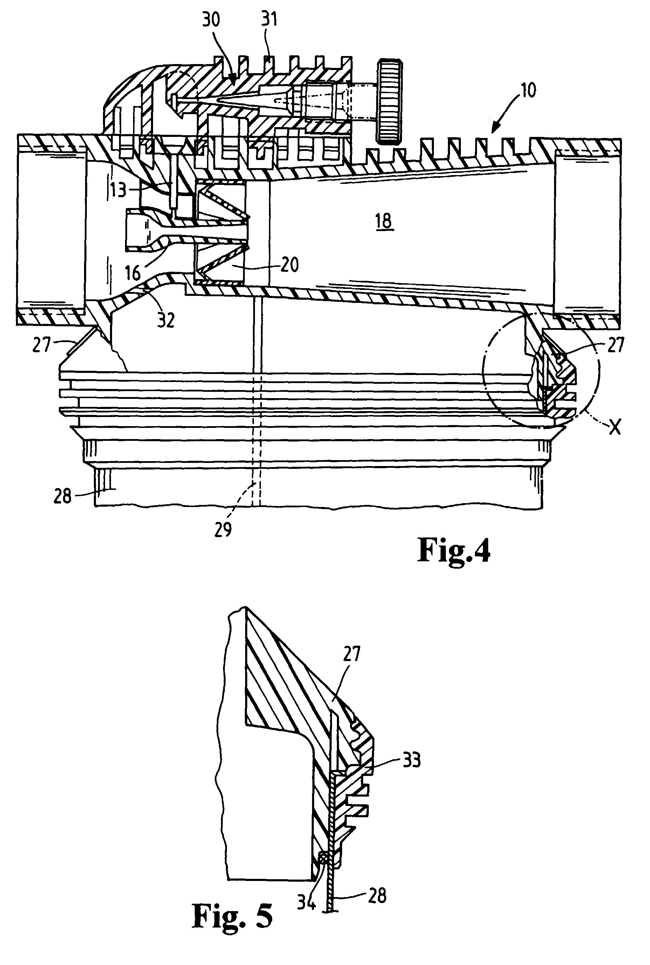

Figur 4 zeigt eine Ausführung der Mischvorrichtung als Luftbeöler. Strömungskanal 18, Innenrohr 16, und Zuleitung 13 funktionieren in derselben Weise wie in der in Figur 1 beschriebenen Ausführungsform. Der Ansaugkanal ist bevorzugt aus Kunststoff hergestellt. An der Unterseite der Mischvorrichtung ist ein runder Ansatz 27 zur Aufnahme des Vorratsbehälters 28 angespritzt.

Die Zuleitung des Öls erfolgt über eine Steigleitung 29, die über ein Drosselventil 30 mit der Zuführung 13 verbunden ist. Das Drosselventil kann in einem Kunststoffgehäuse 31 untergebracht sein, welches dichtend auf die Mischvorrichtung aufgeklipst wird. Mit dem Drosselventil läßt sich die zugeführte Menge an Öl einstellen. Um das Druckgefälle in der Ölzuleitung konstant zu halten, ist eine Druckausgleichsbohrung 32 zwischen Ansaugkanal 18 und Vorratsbehälter 28 vorgesehen.

Figur 5 zeigt das Detail X aus Figur 4. Dieses Detail zeigt ein Montagebeispiel des Vorratbehälters 28 auf dem Ansatz 27 der Mischvorrichtung. Diese Bauteile werden durch einen montagegespritzten Kunststoffring 33 zusammengehalten. Zusätzlich kann eine Dichtung 34 zwischen Vorratsbehälter 28 und Ansatz 27 vorgesehen sein.

## Patentansprüche

1. Mischvorrichtung zum Einbringen eines Fluides in ein strömendes anderes, umfassend
• einen Strömungskanal (18) mit einem Eingang (35) und einem Ausgang (36),
• einem Innenrohr (16), welches sich im Querschnitt des Strömungskanals (18) befindet und dessen Ausrichtung der Bewegungsrichtung des strömenden Fluides entspricht,
• eine Zuführung (13), die durch die Wand des Strömungskanals geführt ist und in das Innenrohr mündet und schwenkbare Zungen (21), die in den Querschnitt des Strömungskanals (18) hineinreichen,
**dadurch gekennzeichnet**, daß der Einflußbereich der Zungen (21) sich zumindest im wesentlichen auf den Querschnittsbereich des Strömungskanals (18) erstreckt, der das Innenrohr umgibt.

2. Mischvorrichtung nach Anspruch 1, **dadurch gekennzeichnet**, daß der Strömungskanal (18), das Innenrohr (16) und die Zungen (21) im wesentlichen zentralsymmetrisch angeordnet sind.

3. Mischvorrichtung nach einem der vorherigen Ansprüche, **dadurch gekennzeichnet**, daß der Strömungskanal (18) im wesentlichen als Venturirohr ausgeführt ist.

4. Mischvorrichtung nach einem der vorherigen Ansprüche, **dadurch gekennzeichnet**, daß das Innenrohr (16) als Venturirohr ausgeführt ist.

5. Mischvorrichtung nach einem der vorherigen Ansprüche, **dadurch gekennzeichnet**, daß die Zungen (21) Bestandteile eines Regeleinsatzes (20) sind.

6. Mischvorrichtung nach einem der vorherigen Ansprüche**, dadurch gekennzeichnet**, daß der Regeleinsatz (20) einteilig insbesondere aus Kunststoff ausgeführt ist, wobei die Zungen (21) elastische Zonen (26) aufweisen.

7. Mischvorrichtung nach einem der vorherigen Ansprüche, **dadurch gekennzeichnet**, daß der Strömungskanal (18) Bestandteil eines Ansaugkanals einer Brennkraftmaschine ist, wobei die Zuführung (13) mit einer Leitung, insbesondere einem Schlauch (15) für Kurbelgehäusegase verbunden ist.

8. Mischvorrichtung nach einem der Ansprüche 1 bis 6, **dadurch gekennzeichnet**, daß diese mit einem Vorratsbehälter (28) verbunden ist, wobei die Zuführung (13) mit einer in den Vorratsbehälter (28) reichenden Steigleitung (29) verbunden ist, und der Strömungskanal eine Druckausgleichsbohrung (32) aufweist, die in den Vorratsbehälter (28) mündet.

9. Verfahren zur Herstellung einer Mischvorrichtung gemäß Anspruch 8, **dadurch gekennzeichnet**, daß die Verbindung zwischen dieser und dem Vorratsbehälter (28) durch einen montagegespritzten Kunststoffring (33) erzeugt wird.
